# EUROPEAN PATENT APPLICATION

(11) **EP 2 277 764 A1**
(43) Date of publication of application: **26.01.2011**
(21) Application number: 09749434.8
(22) Date of filing: 08.05.2009
(51) Int. Cl.: B62D 9/00

(54) **CARRIAGE GRAVITY CENTRE GUIDANCE SYSTEM FOR DELIVERY VEHICLE**

(30) Priority: 20.05.2008 CN 200810047748
(71) Applicant: Wei, Congxin, Hubei 441326 (CN)
(72) Inventor: Wei, Congxin, Hubei 441326 (CN)
(74) Representative: Stuttard, Garry Philip
(86) International application number: PCT/CN2009/071684
(87) International publication number: WO 2009/140891

(57) **Abstract**

It is a carriage (15) gravity center guidance system for delivery vehicle with three or more wheels. The front part of the carriage (15) is connected with four corresponding steering wheels (5 - 8) by four steering shafts (1 - 4). The steering shafts (1 - 4) are respectively equipped with suspension forks (11 - 14). On the back of the carriage, there are three rear wheels (9, 10, 16). The carriage controls the steering wheel shaft center provided between the steering shaft center and back wheel shaft center by the steering shafts and the suspension forks, and takes the steering shaft as shaft center to make the steering wheel shaft center to move left and right between the steering shaft and the back wheel shaft center. The system makes the gravity center to move right when the controlled steering wheel deviates to right, and the gravity center moves left when the controlled steering direction deviates to left, thus, moving the vehicle gravity center to the turning direction when the vehicle drives to turn. The system avoids easy side tumbling, and increases the length and width rate of the vehicle to reduce the section of vehicle driving direction and the wind resistance force to improve the delivery efficiency and lower energy consumption. The system improves the vehicle maneuverability.

## Description

### Description

The present invention relates to the delivery vehicle field, specifically to the gravity center guidance system for a delivery vehicle with three or more wheels.

The currently existing delivery vehicles, such as vehicles with three or four wheels, overcome the centrifugal force generated during the change of directions only by the gravity force pressed between the two wheels. This limits the length-to-width ratio of the delivery vehicles. As a high length-to-width ratio may results in the rollover of a vehicle due to the excess centrifugal force at a high travel speed, such a vehicle is therefore unsafe, has poor maneuverability and consumes more energy.

In view of the aforementioned features in the current technological field, the present invention aims to provide the gravity center guidance system for delivery vehicles with three or more wheels, and this system makes the gravity center of the vehicle move to the direction in which the vehicle needs to change to.

The present invention is realized as follows. The front part of the carriage is respectively connected with the corresponding first, second, third and fourth steering wheels by the corresponding first, second, third and fourth steering shafts; the corresponding first, second, third and fourth suspension forks are respectively installed on the corresponding first, second, third and fourth steering shafts; the first, second and third rear wheels are arranged at the rear part of the frame.

In this invention, the front part of the frame is respectively connected with the four corresponding steering wheels by the four steering shafts; and the four suspension forks are installed on the four steering shafts respectively.

Due to the adoption of the technical scheme, the frame acts through the steering shafts and the suspension forks to facilitating the control of the center of the steering wheels to be between the center of the steering shaft and the rear wheel. The steering shafts direct the movement of the steering wheels to the left or the right of the steering shafts, while the steering wheels remain in between the steering shafts and the rear wheels. When the steering wheels are guided to move to the right of the steering shafts, the gravity center of the frame also moves to the right; when the steering wheels are guided to move to the left of the steering shafts, the gravity center of the frame also moves to the left. Thus, the gravity center of the vehicle can be guided to move to the direction to which the vehicle needs to change, and this system reduces the risk of vehicle rollover on its side. Therefore, the gravity center guidance system also make it possible to increase the limit of the length-to-width ratio of the vehicle, to decrease the cross-sectional area of the vehicle in its travel direction and to lower the wind resistance, which improves the vehicle efficiency, reduces the energy consumption and improves the maneuvering performance of the vehicle.

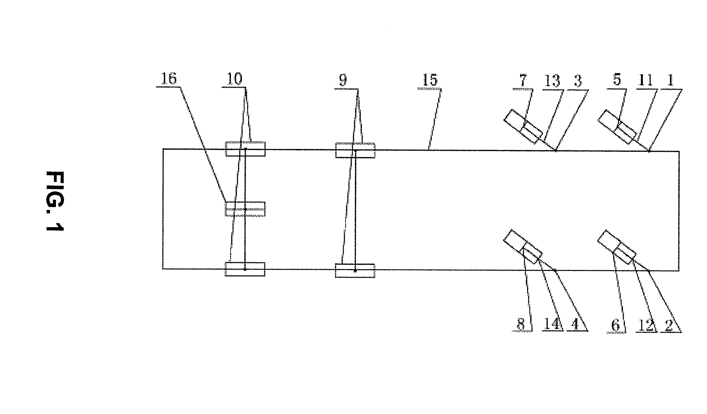

FIG. 1 is a schematic drawing of the structure of the present invention.

In the figure 1, the front part of the carriage 15 is respectively connected with the four corresponding steering wheels 5, 6, 7 and 8 by the four steering shafts 1, 2, 3 and 4; the four suspension forks 11, 12, 13 and 14 are installed on the steering shafts 1, 2, 3 and 4 respectively; and the three rear wheel 9, 10, 16 are arranged at the rear part of the carriage 15.

The present invention has the following operational principle. The carriage acts through the steering shafts 1, 2, 3 and 4 and the four suspension forks 11, 12, 13 and 14 to control the steering wheels 5, 6, 7 and 8 when the vehicle needs to change direction; the steering wheels 5, 6, 7 and 8 move to the left or the right as guided by the steering shafts 1, 2, 3 and 4 respectively under the action of the gravity center of the vehicle. When the gravity center of the delivery vehicle moves to left, the steering wheels 5, 6, 7 and 8 move to the left; when the gravity center of the delivery vehicle moves to right, the steering wheels 5, 6, 7 and 8 move to the right.

The figure also includes an implementation scheme in which the carriage 15 acts through the four steering shafts 1, 2, 3 and 4 and the four suspension forks 11, 12, 13 and 14 to control the steering wheels 5, 6, 7 and 8 respectively to be in between the steering shaft s1, 2, 3 and 4 and the rear wheel 9, thereby facilitating the change of direction to the left or right. This is a second implementation scheme of the present invention.

The figure also includes an implementation scheme in which the carriage 15 acts through the steering shafts 1, 2 and the suspension forks 11, 12 to control the steering wheels 5, 6 respectively to be in between the steering shafts 1,2 and the rear wheels 9,10, thereby facilitating the change of direction to the left or the right. This is a third implementation scheme of the present invention.

The optimal implementation scheme of the present invention is as follows. The carriage 15 acts through the steering shafts 1, 2 and the suspension forks 11, 12 to control the steering wheels 5, 6 respectively to be in between the steering shafts 1,2 and the rear wheels 9, thereby facilitating the change of direction to the left or the right.

The figure also includes an implementation scheme in which the carriage 15 acts through the steering shafts 1, 2 and the suspension forks 11, 12 to control the steering wheel 5, 6 respectively to be in between the steering shafts 1,2 and the rear wheel 16, thereby facilitating the change of direction to the left or the right.

For these implementation schemes, when the delivery vehicle needs to change directions, the steering wheels are controlled to move to the left or the right while still remain in between the steering shafts and the rear wheels by taking the steering shafts as an axis, i.e. the steering wheels move to the left when the gravity center of the vehicle shifts to the left; the steering wheels move to the right when the gravity center of the vehicle shifts to the right, therefore achieving the purpose of the present invention.

Detailed description and detailed implementation herein above is an explanation of the embodiments of the present invention. The present invention is not limited to the scope of such detailed description and detailed implementation. It will be appreciated that those skilled in the art will realize various simple deduction or alternation, which falls within the true scope of the invention. Therefore, the aim in the appended claims is to cover all such changes and modifications that fall within the true spirit and scope of the invention.

## Claims

1. The gravity center guidance system for a delivery vehicle with three or more wheels having the following characteristics: the front part of the carriage is respectively connected with the corresponding first, second, third and fourth steering wheels by the first, second, third and fourth steering shafts, and the rear part of the carriage is provided with the first, second and third rear wheels.

2. The gravity center guidance system, as recited in claim 1, wherein the first, second, third and fourth steering shafts are respectively installed with the first, second, third and fourth suspension forks.
